# EUROPEAN PATENT SPECIFICATION

(11) **EP 2 420 036 B1**
(45) Date of publication and mention of the grant of the patent: **06.07.2016**
(21) Application number: 10712936.3
(22) Date of filing: 31.03.2010
(51) Int. Cl.: H04L 29/06, G06F 21/10, G06F 21/33

(54) **METHOD AND APPARATUS FOR ELECTRONIC TICKET PROCESSING**
VERFAHREN UND VORRICHTUNG ZUR ELEKTRONISCHEN TICKET-VERARBEITUNG
PROCÉDÉ ET DISPOSITIF POUR UN TRAITEMENT DE BILLET ÉLECTRONIQUE

(30) Priority: 17.04.2009 US 425490
(43) Date of publication of application: 22.02.2012
(73) Proprietor: Telefonaktiebolaget LM Ericsson (publ), 164 83 Stockholm (SE)
(72) Inventor: ROOS, Johan, SE-227 60 Lund (SE); BJÖRKENGREN, Ulf, SE-237 34 Bjärred (SE); CATREIN, Daniel, 52146 Würselen (DE)
(74) Representative: Ericsson
(86) International application number: PCT/EP2010/054297
(87) International publication number: WO 2010/118957

(56) References cited:
- WO-A2-03/042225
- US-A1- 2004 111 694
- US-A1- 2005 070 257
- "Chapter 10: Identification and Entity Authentication ED - MENEZES A; OORSCHOT VAN P; VANSTONE S" [Online] 1 October 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP001525010 ISBN: 978-0-8493-8523-0 Retrieved from the Internet: URL:http://www.cacr.math.uwaterloo.ca/hac/ ORD - 1996-10-00> Sections 10.3 and 10.4
- SUSANNE GUTH, GUSTAF NEUMANN, MARK STREMBECK,: "Towards a Conceptual Framework for Digital Contract Composition and Fulfillment," VIRTUAL GOODS 2003 - INTERNATIONAL WORKSHOP FOR TECHNOLOGY, ECONOMY, SOCIAL AND LEGAL ASPECTS OF VIRTUAL GOODS, 22 May 2003 (2003-05-22), 24 May 2003 (2003-05-24), XP002601680 Ilmenau, Germany Retrieved from the Internet: URL:http://virtualgoods.tu-ilmenau.de/2003 /toward_contract_frmwrk.pdf [retrieved on 2010-09-22] cited in the application

## Description

### FIELD OF THE INVENTION

The present invention generally relates to electronic ticketing, and particularly relates to the advantageous use of Digital Rights Management (DRM) systems to simplify electronic ticket issuance, storage, and redemption.

### BACKGROUND

Electronic tickets increase user convenience and eliminate the waste associated with manufacturing and distributing physical tickets. Further, the increasing use of handheld, intelligent terminals, such as smart phones, provides an ever expanding user base for fielding secure and easy-to-use electronic ticketing systems.

While electronic ticketing systems share certain similarities with electronic wallets and other secure, electronic payment systems, those systems typically rely on linkage to a user's financial account for crediting and debiting money in association with conducting transactions. With electronic tickets, the electronic ticket object itself functions as the "value" object. With this approach, electronic tickets are purchased, issued, stored, and redeemed, in a manner analogous to paper tickets. As with paper tickets, fraud prevention remains a central objective, and much work has been done in preventing electronic ticket fraud, while preserving user convenience. U.S. Pat. No. 7,315,944 B2 to Dutta et al. discloses a comprehensive system for issuing, temporarily storing, and redeeming electronic tickets and other types of "stored-value data objects". This patent belongs to a larger set of patents and pending applications, all directed to various aspects of an overall stored-value data object issuance and redemption system. Related applications include US2003/0093695 and US2008/0061137, both to Dutta.

Further, U.S. Pat. 6,260,027 B1 to Takahashi et al. discloses examples of electronic ticket issuing systems, ticket collecting systems, and user terminals configured for obtaining and redeeming electronic tickets. Additionally, a series of published U.S. patent applications to Sakamura disclose the use of a secure integrated circuit card, for use in secure electronic ticket issuance and redemption processing. These published applications include U.S. App. 2004/0030896 A1, U.S. App. 2004/0059685 A1, and U.S. App. 2008/0109371 A1. For additional, useful discussions of electronic ticketing systems, the interested reader should refer to Patel, Bhrat and Crowcroft, Jon, Ticket Based Service Access for the Mobile User, MOBICOM 97 (Budapest Hungary, 1997); and to U.S. Pat. 6,192,349 B1 to Husemann, et al.

Known approaches to electronic ticketing also involve certain aspects of digital rights management (DRM). For example, the OPEN MOBILE ALLIANCE (OMA) developed and released "DRM v2.0" as a package of protocols, messages, and functions for implementing DRM in the "mobile" environment. For further discussions of DRM concepts in the context of electronic ticketing, the reader may also refer to Guth, et al., Toward a Conceptual Framework for Digital Contract Composition and Fulfillment, International Workshop for Technology, Economy, Social and Legal Aspects of Virtual Goods, Illmenau, Germany (2003); and to U.S. App. 2006/0288424 A1 to Saito.

US 2004/0111694 discloses a method and apparatus for distributing enforceable property rights. The enforceable property right comprises an item ticket specifying an item for which the item ticket can be redeemed and having a security mechanism incorporated therein, and a license associated with the item ticket. The license includes usage rights specifying a manner of use for redeeming the item ticket and means for unlocking the security mechanism.

### SUMMARY

This document discloses an advantageous approach to using a digital rights management (DRM) system that is already available to an electronic device, for security and rights management in electronic ticketing transactions. Exploiting the digital rights management system, which may be a pre-existing "standardized" DRM solution, decreases the processing and memory resources needed in an electronic device for implementation of an electronic ticketing application, while advantageously gaining the proven security of established DRM systems.

As a non-limiting example, a cellular telephone or other electronic device has a standardized DRM solution installed within it. For example, an electronic device that includes music playback capabilities also includes a MICROSFT PLAYREADY, OMA DRM, MARLIN Broadband (BB), or other standardized DRM agent that is configured to interact with remote DRM servers, etc., as part of a networked DRM system. According to the teachings proposed in this document, the electronic device receives electronic ticket objects that are packaged to appear as standard DRM objects.

In this manner, ticket issuers issue electronic tickets as DRM objects, thereby relying on established DRM systems for securing the ticket content and enforcing usage restrictions. Moreover, a ticket agent installed in the electronic device advantageously uses a DRM agent, installed at the electronic device as part of the established DRM system, to decrypt received electronic tickets, subject to DRM-based usage restrictions. The ticket agent thus need not include security mechanisms for obtaining, storing, and decrypting electronic ticket objects, as those functions are already "built in" the existing networked DRM system. As such, electronic ticket objects can be packaged, issued and handled much like standard DRM objects, such as music files, etc.

One embodiment disclosed in this document comprises a method of electronic ticket processing in an electronic device having a digital rights management agent installed in it. Here, the digital rights management agent operates as part of a networked digital rights management system, and the method comprises receiving a ticket object that includes a ticket key encrypted with a content encryption key according to the digital rights management system. The method further includes receiving a rights object compatible with the digital rights management system, including one or more usage restrictions corresponding to the ticket object and the content encryption key encrypted with a digital rights management key associated with the digital rights management agent, and redeeming the ticket object, using at least one ticket agent installed in the electronic device. Redeeming operations include retrieving the ticket key from the digital rights management agent, subject to the one or more usage restrictions;

Another embodiment comprises an electronic device having a digital rights management agent installed in it. As with the above method, the digital rights management agent operates as part of a networked digital rights management system, and the electronic device includes one or more communication interfaces, memory, and one or more processors, e.g., CPUs, or other microprocessor-based digital processing circuits. The processor(s) is operatively associated with the memory and communication interfaces.

Correspondingly, the one or more communication interfaces are configured for receiving a ticket object that includes a ticket key encrypted with a content encryption key according to the digital rights management system, and for receiving a rights object compatible with said digital rights management system. Here, the rights object includes one or more usage restrictions corresponding to the ticket object and includes the content encryption key encrypted with a digital rights management key associated with the digital rights management agent.

Further, the memory provides storage for the ticket and rights objects, and the one or more processing circuits are configured to implement the digital rights management agent, and to implement at least one ticket agent that is configured to redeem the ticket object. The ticket agent(s) redeems the ticket object based on retrieving the ticket key from the digital rights management agent, subject to the one or more usage restrictions, and communicating with an external agent according to a predefined verification protocol, to verify possession of the ticket key, without exposing the ticket key to the external agent.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Fig. 1 is a block diagram of one embodiment of an electronic device that implements electronic ticket processing, and operates as part of an existing networked digital rights management (DRM) system.
Fig. 2 is a logic flow diagram of one embodiment of electronic ticket processing that exploits a DRM system.
Fig. 3 is a block diagram of one embodiment of an electronic ticket object.
Fig. 4 is a block diagram of another embodiment of an electronic device that implements electronic ticket processing.
Fig. 5 is a block diagram of another embodiment of an electronic device that implements electronic ticket processing, highlighting a ticket redemption data flow associated with verification by an external electronic verification system.
Fig. 6 is a block diagram of another embodiment of an electronic device that implements electronic ticket processing, highlighting a ticket redemption data flow associated with verification by a human operator.
Fig. 7 is a block diagram of another embodiment of an electronic device that implements electronic ticket processing, shown with example content details for two variations of electronic ticket objects.
Fig. 8 is a processing flow diagram of one embodiment of an electronic ticket redemption protocol.

### DETAILED DESCRIPTION

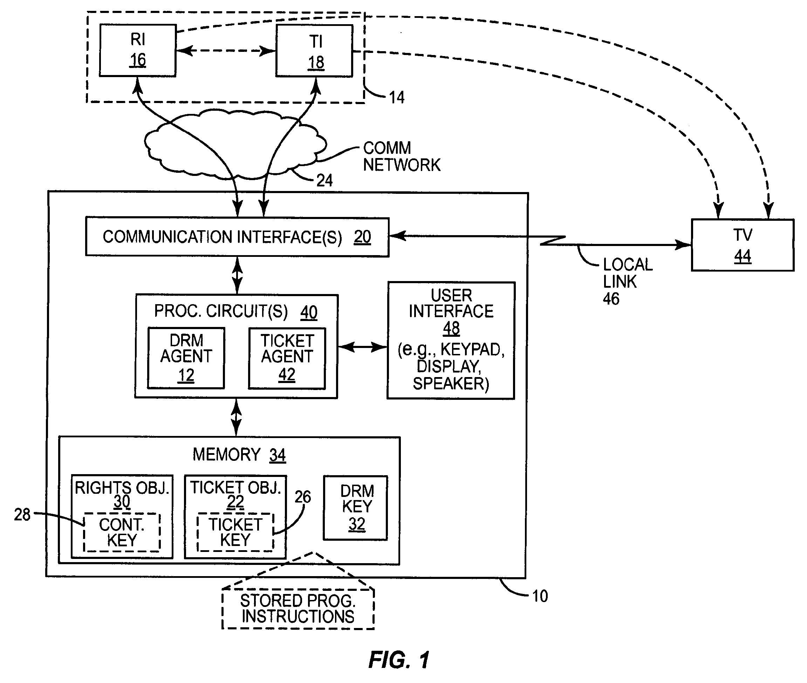

Fig. 1 illustrates an electronic device 10 that includes a digital rights management (DRM) agent 12 installed in it. The DRM agent 12 operates as part of a "networked digital rights management system". The networked digital rights management system includes the DRM agent 12 and a remote, network-accessible DRM server 14, and it should be understood as implementing an overall "DRM solution" for issuing and using rights-managed data objects. The advantageous method and apparatus for electronic ticket processing disclosed in this document "piggyback" electronic ticket processing onto this preexisting DRM solution, thereby gaining issuance, storage, and redemption processing security for electronic tickets, without adding much in the way of security and processing overhead to the electronic device 10, and without changing or modifying the standardized DRM operations.

In more detail, one sees that the DRM server 14 comprises networked computer systems, identified as a Rights Issuer (RI) 16 and a Ticket Issuer (TI) 18. As is known, the RI 16 and the TI 18 are available via the Internet or other network connection, and it should be appreciated that they may be implemented separately (as shown) or may be integrated into the same computer/server system. Further, it should be understood that the TI 18 need not be implemented as a component of the DRM server 14. However implemented, the advantage of electronic ticket processing disclosed in this document assumes that a standardized, preexisting DRM solution is in place, thereby allowing the electronic device 10 to handle properly "packaged" electronic tickets just as the DRM solution handles whatever rights-managed objects are standard for that DRM solution, e.g., these properly packaged electronic tickets are managed transparently within the DRM solution, just like standard rights-managed music files, video files, etc.

In other words, the electronic ticket processing disclosed in this document uses the existing DRM solution for issuing, securing, and redeeming electronic tickets in a way that is transparent to the DRM solution. Non-limiting examples of standardized DRM solutions include OMA DRM, MICROSOFT PLAYREADY, and MARLIN BB (refer to the Marlin Trust Management Organization), all of which provide defined protocols, messages, functions, and encryption keys/certificates, for issuing and using rights-managed data objects.

In further example details taken from Fig. 1, the electronic device 10 comprises one or more communication interfaces 20, for receiving a ticket object 22, e.g., directly or indirectly from the DRM server 14 through one or more communication networks 24. In at least one embodiment, the communication networks 24 include a cellular communication network, and the communication interfaces 20 include a cellular transceiver, thus allowing electronic tickets and corresponding usage rights to be obtained via cellular communication links. Of course, it will be understood that the cellular core network can provide access to the Internet at large and/or interface with other public or private data networks. Further, in the same or other embodiments of the electronic device 10, the communication interfaces 20 further include a Bluetooth or other short-range wireless communication interface, providing a local wireless communication link. In any case, the ticket object 22 includes a ticket key 26 encrypted with a content encryption key 28 according to the DRM system. The electronic device 10 further receives - through its communication interfaces 20 - a rights object 30 that is compatible with the DRM system. That is, the rights object 30 acts as a license for the ticket object 22, and it includes data defining one or more usage restrictions corresponding to the ticket object 22. In at least one embodiment, the rights object 30 also includes the content encryption key 28, as encrypted with a digital rights management key 32, or other key associated with the DRM agent 12. As noted above, the ticket object 22 and rights object 30 are defined as electronic files or other electronic data objects using a formatting structure compatible with the DRM solution.

The electronic device 10 further includes memory 34, for storing the ticket object 22 and the rights object 30. The memory 34 also may be used to store program instructions for implementing the standardized DRM functions that are exploited by the electronic ticket processing disclosed in this document, along with program instructions for implementing that electronic ticket processing, along with the overall functionality of the electronic device 10 - e.g., music player functionality, cellular phone/smart-phone functionality, etc.

In this regard, the memory 34 may comprise more than one memory circuit or device. For example, memory 34 may include working RAM for scratchpad use during operation of the electronic device 10, and may include one or more non-volatile memory elements - EEPROM, FLASH, etc. - for storing program instructions. Still further, the memory 34 may include physically and electronically secure volatile and/or non-volatile memory, such as in a tamper-proof, potted enclosure within an enclosure of the electronic device 10. Secure memory may be used for holding sensitive data, such as the DRM key 32.

In further example details, the electronic device 10 includes one or more processing circuits 40. In one embodiment, these circuits comprise one or more microprocessor circuits that are specially adapted to carry out the electronic ticket processing described in this document, based at least in part on the execution of stored program instructions. In any case, the one or more processing circuits 40 are operatively associated with the one or more communication interfaces 20 and the memory 34, and are configured to implement a digital rights management (DRM) agent 12, and to implement at least one ticket agent (TA) 42 that is configured to redeem the ticket object 22.

Ticket redemption as carried out by the at least one ticket agent 42 includes retrieving the ticket key 26 from the DRM agent 12, subject to the one or more usage restrictions imposed by the rights object 30. Note that retrieving the ticket key 26 generally involves retrieving the ticket object 22, where the DRM agent 12 decrypts the ticket object 22 into usable form, subject to DRM usage restrictions. Redemption further includes communicating with a ticket verifier 44 according to a predefined verification protocol, to verify possession of the ticket key 26, without exposing the ticket key 26 to the ticket verifier 44.

In the diagram, the ticket verifier 44 is labeled "TV" to denote "ticket verifier". For further reference to the ticket verifier 44, the term "ticket verifier 44" is used. The diagram also illustrates a "local link" 46, for carrying communications between the electronic device 10 and the ticket verifier 44.

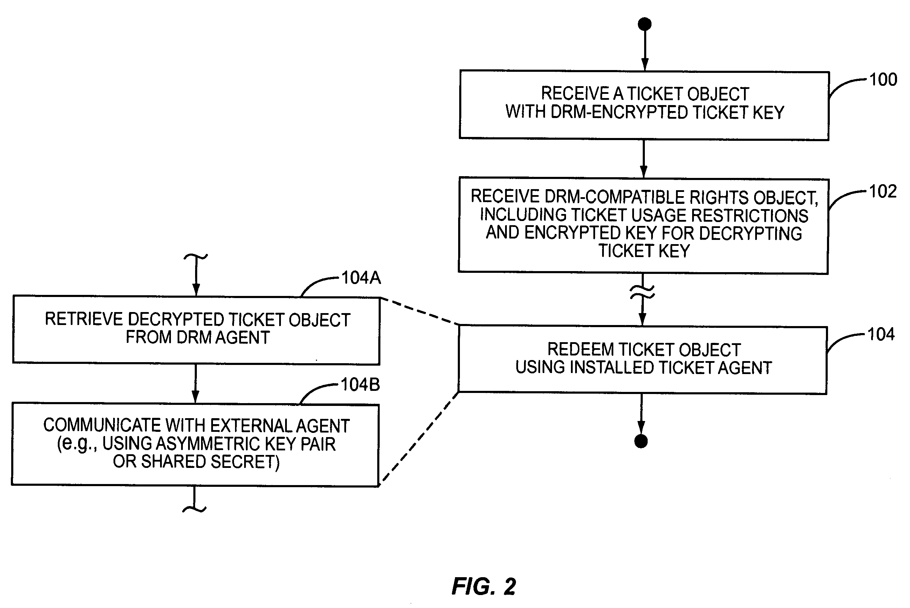

In one or more embodiments, the local link 46 is a near-field communications (NFC) link, such as low-power radio signaling according to proprietary or standard protocols. The local link 46 also can be Bluetooth connection, an optical connection, or even a cabled connection. One also sees that the illustrated electronic device 10 includes a user interface 48, which provides, e.g., a keypad, display, and one or more speakers, for interacting with a user of the electronic device 10. Subsequent details discuss the various ways in which the user interface 48 can be used to support various embodiments of electronic ticket processing, including ticket redemption processing. With the example details of Fig. 1 in mind, one or more embodiments of the electronic device 10 are configured to implement a method of electronic ticket processing, such as that shown in Fig. 2. In particular, the processing circuit(s) 40 of the electronic device 10 may be configured via program execution to implement the illustrated method. It should be understood that the illustrated processing may be repeated for multiple ticket transactions, and that the illustrated processing may be carried out as part of, or in conjunction with, other processing operations. Receiving a given ticket object 22 typically is the result of a browsing session on a web site where ticketing services are commercially offered, and where a user of the device 10 has purchased a ticket. Of course, this example is non-limiting and other types of transactions for purchasing or otherwise initiating the delivery of an electronic ticket to the device 10 are contemplated. Thus, however initiated, the illustrated processing "begins" with receiving a ticket object 22, including a DRM-encrypted ticket key 26 (Block 100). Processing continues with receiving a DRM-compatible rights object 30 (Block 102). Here, the rights object 30 is "DRM-compatible" in the sense that it is formatted, structured, or otherwise configured according to the particulars of the DRM solution installed in the electronic device 10. For example, if the networked DRM system, including the DRM server 14 and the DRM agent 12 is based on MICROSOFT PLAYREADY, the rights object 30 is configured as a PLAYREADY rights object, the difference being its use for imposing usage restrictions on the ticket object 22, rather than the more customary music file control. Of course, as an advantage disclosed herein, that usage difference is transparent to the DRM agent 12.

With the above implementation, the rights object 30 includes ticket usage restrictions governing the permitted usage of the ticket object 22 (Block 102). Further, in at least one embodiment, the rights object 30 includes an encrypted key for decrypting the ticket key 26. For example, the rights object 30 includes the content key 28 shown in Fig. 1. Depending on the particulars of the network DRM system, the content key 28 may be directly encrypted with DRM key 32 that is owned or uniquely associated with the DRM agent 12, or it may be encrypted with a DRM "domain" key that is encrypted with the DRM agent's key 32. In either case, the content key 28 is advantageously encrypted with a digital rights management key that is associated with the DRM agent 12.

Thus, the electronic device 10 receives a ticket object 22 and its corresponding rights object 30, and it stores them for redemption by a user of the electronic device 10. Processing continues at some time after receiving the ticket object 22 and the rights object 30 with redeeming the ticket object 22 using the installed ticket agent 42 (Block 104). In the illustration, Block 104 is broken out into more detailed operations, including retrieving the decrypted ticket object from the DRM agent 12 (Block 104A), and communicating with the ticket verifier 44, to redeem the ticket object 22 (Block 104B).

The above electronic ticket processing advantageously allows the ticket object 22 to be received, stored, handled, and decrypted by the DRM agent 12, according to the restrictions imposed by the corresponding rights object 30. The ticket agent 42 need only be configured to request the ticket object 22 from the DRM agent 12, and to implement a redemption protocol for redeeming the ticket object 22 after the DRM agent 12 provides the decrypted ticket object contents. Thus, the method includes retrieving the ticket key 26 from the DRM agent 12, subject to the one or more usage restrictions, and communicating with the ticket verifier 44 according to a predefined verification protocol, to verify possession of the ticket key 26, without exposing the ticket key 26 to the ticket verifier 44.

As a further advantage, in at least one embodiment, the ticket object 22 includes the ticket key 26 as the for-value redemption token, and further includes an embedded ticket agent. Embedding a ticket agent in the ticket object 22 offers numerous advantages. For example, the embedded ticket agent can be a one-time-use application, further enhancing redemption security and aiding fraud prevention. Further, the embedded ticket agent as a small, embedded applet, can be easily tailored for a particular redemption protocol, and can be easily changed for different ticket vendors and/or for different types of ticket verification systems.

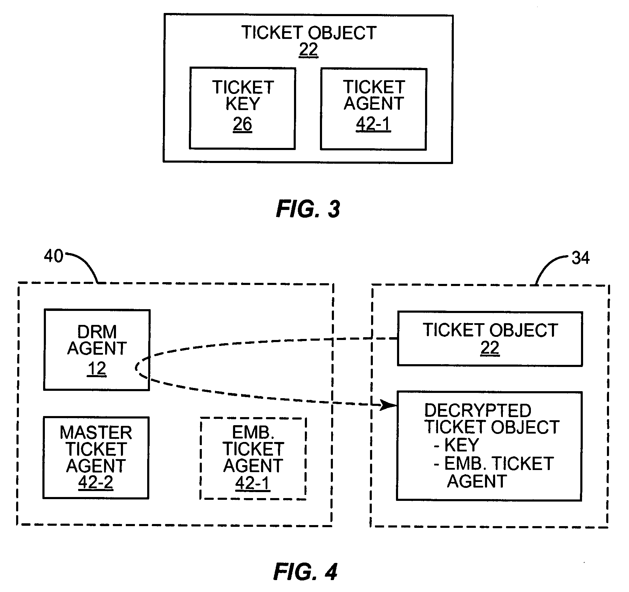

Fig. 3 illustrates one embodiment of a ticket object 22 that includes the ticket key 26 and an embedded ticket agent 42-1. (Note that in this document's nomenclature, a ticket object 22 that includes an embedded ticket agent is sometimes referred to as a "composite" ticket object; however, it should be understood that even when a ticket object does not include an embedded ticket agent, it nonetheless may include a number of constituent elements, e.g., the ticket key 26, etc.) As a non-limiting example, in at least one embodiment, the embedded ticket agent 42-1 is implemented as a JAVA applet or midlet, for execution in a JAVA virtual machine implemented within the electronic device 10. As such, a user of the electronic device 10 may, via a web browser application, navigate to a ticket vending web site, activate a ticket purchase link, make payment, and then receive the composite ticket object 22, along with the rights management object 30. Subsequent redemption could, in such embodiments, be triggered by attempting to open the downloaded ticket object file, selecting a pointer to it, etc.

In any case, once initiated, the DRM agent 12 identifies the rights object 30 as corresponding to the composite ticket object 22 and, if the specified usage conditions are met, the DRM agent 12 decrypts the composite ticket object 22, thus making the embedded ticket agent 42-1 available for execution in support of ticket redemption.

Thus, in at least one embodiment, the ticket object 22 comprises a composite ticket object that includes an embedded ticket agent 42-1 and the ticket key 26, both protected by the content encryption key 28. Further, the one or more processing circuits 40 are configured to redeem the ticket object 22 by retrieving the embedded ticket agent 42-1 and the ticket key 26 from the DRM agent 12, and using the embedded ticket agent 42-1 to redeem the ticket object 22.

In at least one such embodiment, the one or more processing circuits 40 are configured to implement a master ticket agent, such as shown in Fig. 4. Here, a master ticket agent 42-2 is configured to retrieve the embedded ticket agent 42-1 and the ticket key 26 from the DRM agent 12. That is, the master ticket agent 42-2 is configured to initiate decryption/unpacking of the secure ticket object 22 by the DRM agent 12, in accordance with the usage restrictions imposed by the rights object 30.

Further, the master ticket agent 42-2 is configured to install or otherwise initiate the embedded ticket agent 42-1, and provide it with a reference to the ticket key 26, for use in redeeming the ticket key 26 by the embedded ticket agent 42-1, while retaining the ticket key 26 securely under control of the master ticket agent. For example, the master ticket agent 42-2 comprises a secure application executing in a secure processing environment. Rather than exposing the actual ticket key 26 to the embedded ticket agent 42-1, the master ticket agent 42-2 retains control of the ticket key 26, e.g., it retains it in secure memory after the DRM agent 12 decrypts the ticket object 22, and provides controlled access to the ticket key 26 through a pointer or other program reference passed to the embedded ticket agent 42-1.

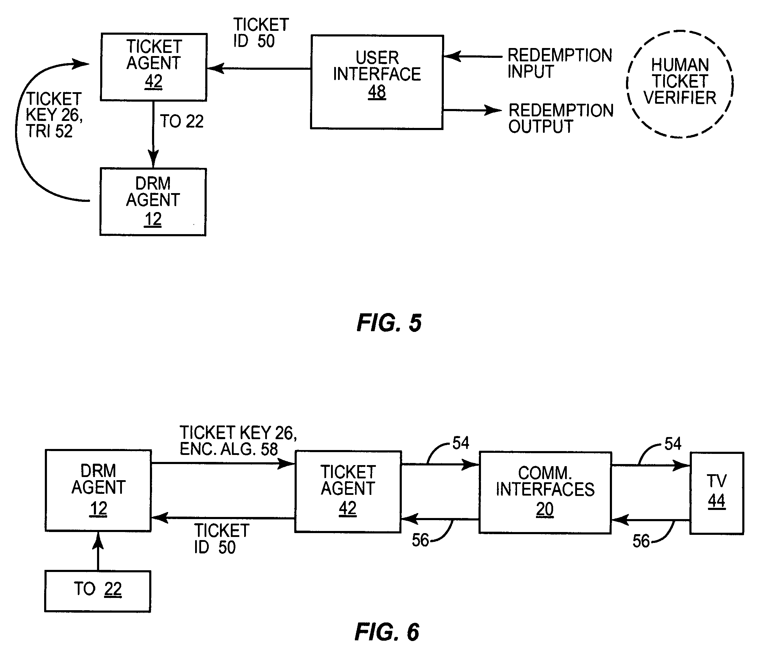

In this manner, the master ticket agent 42-2 can be preinstalled in the electronic device 10, or at least installed in advance of ticket redemption, and it need not be burdened with implementing ticket redemption protocols. Instead, the master ticket agent 42-2 need only provide an agreed-upon protocol for making ticket key information available to downloaded, embedded ticket agents 42-1, and implementation of varied, possibly changing redemption protocols can be left to the embedded ticket agents 42-1. Having a master ticket agent 42-2 also relieves some of the security restrictions that may otherwise be placed on the embedded ticket agent 42-1, by allowing only the master ticket agent 42-2 to have direct access to the ticket object data. Whether one or multiple ticket agents are used for redemption, in one embodiment, the ticket verifier 44 depicted in Fig. 1 is a human operator. In this case, the local link 46 shown in Fig. 1 generally does not exist. Instead, redemption operations rely on the user interface 48 of the electronic device 10. In one such embodiment, as illustrated in Fig. 5, the ticket agent 42 is configured to redeem the ticket object 22 responsive to receiving a ticket identifier (ID) 50 via a user interface of the electronic device 10. For example, the human ticket verifier may key in a numeric code value via a keypad of the user interface 48, or such data could be "swiped" into the electronic device 10 using an electronic fob, etc.

In any case, the ticket ID 50 corresponds to a particular ticket object 22 stored in the electronic device 10, and the ticket agent 42 is configured to pass the ticket object 22 corresponding to the ticket ID 50 to the DRM agent 12, or is configured to pass a reference to the ticket object 22. In turn, the DRM agent 12 checks the corresponding rights management object 30 for usage restrictions and, if ticket usage is permitted, it decrypts the ticket object 22. Thus, the ticket agent 42 receives the ticket key 26 and ticket rendering information (TRI) 52 in return. The ticket agent 42 then renders the ticket information in a human-verifiable format via the user interface 48 of the electronic device 10, in accordance with the TRI 52. For example, the TRI 52 may comprise electronic data for rendering a two-dimensional bar code or other defined pattern on a display screen of the user interface 48, as redemption output data for verification by the human ticket verifier.

Of course, in a number of embodiments, the ticket verifier 44 comprises an electronic verification system. Fig. 6 illustrates an example, where the ticket agent 42 is configured to redeem the ticket object 22 by generating verification information 54 for the electronic verification system and verifying counter-verification information 56 from the electronic verification system, based on using the ticket key 26 as a shared secret between the ticket agent 42 and the electronic verification system. Alternatively, the verification is based on the use of an asymmetric key pair, one for the ticket agent 26 and one for the electronic verification system. In such embodiments, the ticket agent 42 is configured to use one of the one or more communication interfaces 20, for sending the verification information 54 to the electronic verification system and receiving the counter-verification information 56 from the electronic verification system. As part of such processing, the ticket agent 42 receives a ticket ID 50, which is conveyed electronically from the ticket verifier 44 to the ticket agent 42, through the communication interface(s) 20.

In at least one such embodiment, then, the ticket agent 42 is configured to redeem the ticket object 22 responsive to receiving the ticket ID 50 from the ticket verifier 44, acting as an electronic verification system. As before, the ticket ID 50 corresponds to a particular ticket object 22, where the electronic device 10 may hold multiple ticket objects at any given time. The ticket agent 42 is configured to retrieve the ticket object 22 corresponding to the ticket ID 50 and pass it to the DRM agent 12, and to receive the ticket key 26 and an encryption algorithm 58 in return. The ticket agent 42 uses the ticket key 26 and the other data required in the verification process, such as the encryption algorithm 58, to generate the verification information 54 for the electronic verification system.

The data structure and encryption methods used for the ticket object 22 complement the above processing, and variants of it. Broadly, the ticket object 22 comprises a content file that is tagged or otherwise packaged according to a predefined digital rights management format, for handling as a rights-managed object by the DRM agent 12. That is, the DRM agent 12 need not be aware that the ticket object 22 is an electronic ticket, as compared to a music file, etc., because it is packaged to look like any other rights-managed object type the DRM agent 12 is programmed to understand.

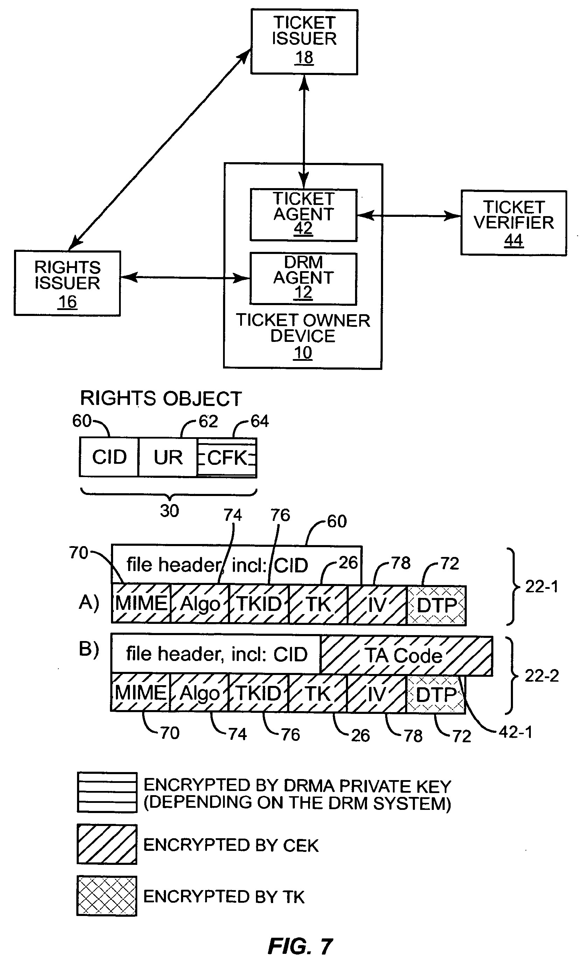

Fig. 7 illustrates more detailed examples for two embodiments of the ticket object 22. One is shown as 22-1, which does not include an embedded ticket agent 42-1, and one is shown as 22-2, which does include an embedded ticket agent 42-1 - denoted as "TA Code" in the illustrated ticket object. Fig. 7 also shows the DRM agent 12, the ticket agent 42, both within the electronic device 10, the rights issuer 16, the ticket issuer 18, and the ticket verifier (external agent) 44. As noted, the ticket agent 42 is responsible for communicating with the ticket verifier 44, i.e., to run a defined ticket verification protocol (TVP). The ticket agent 42 does not have to perform any checks of the ticket's validity, as the DRM agent 12 ensures that the ticket agent 42 only gets access to the ticket's credentials during the validity period. From the external world's perspective, the ticket verifier 44 is responsible for the verification of the ticket object 22, and it thus determines whether the ticket owner - normally the owner of the electronic device 10 - is allowed access to the location or service associated with the ticket object 22.

While the illustrations have depicted the DRM agent 12 and the ticket agent 42 as being colocated within the electronic device 10, they can also be located in different devices. For example, the DRM agent 12 may be located in a PC or "home gateway", with the ticket agent 42 located in the electronic device 10, such as a phone or other portable device having communication capability with the PC or home gateway. In any case, a user initiates or otherwise carries out the purchase of an electronic ticket, and the TI 18 thereby issues an electronic ticket object 22, for issuance to the electronic device 10, along with the appropriate constraints as identified in the rights object 30, which may be sent via the RI 16. Also, note that if the communication line or channel between the DRM agent 12 and the ticket agent 42 is not secure, then the communications themselves are made secure, e.g., through encryption. Depending on the actual deployment, at least three types of digital tickets are contemplated. If the ticket agent 42 is already present - installed in - the electronic device 10, the TI 18 delivers only the credentials necessary to gain access to the given event, via the ticket verifier 44. These credentials are protected, such as being encrypted by the networked DRM system. That is, if the electronic device 10 already has a ticket agent 42 installed in it, the ticket object 22 need only carry the credentials needed for redemption. This configuration is shown as ticket object 22-1 in the diagram.

On the other hand, if there is not a ticket agent 42 already installed in the electronic device 10, the ticket object 22 may be the kind of composite ticket object shown in Fig. 3, where the redemption credentials of the digital ticket and the executable code of the ticket are packed together and delivered to the electronic device 10. This configuration is shown as ticket object 22-2 in the diagram. The case with a ticket agent 42 installed in the device 10 may also support the scenario with an embedded ticket agent 42-1, as shown in the composite ticket object 22-2. In such cases, the whole package is protected by the networked DRM system, and the electronic device 10 provides an execution environment, e.g., a JAVA virtual machine, in which the received ticket agent software - e.g., the embedded ticket agent 42-1 - can be run. However, a valid DRM license is required for the DRM agent 12 to decrypt the ticket object 22 to gain access to the credentials and the ticket agent software.

In a similar case, the electronic device 10 has a master ticket agent installed in it, e.g., the master ticket agent 42-2 of Fig. 4. Thus, the execution environment of the electronic device 10 "calls" the master ticket agent 42-2, to initiate ticket redemption. However, the contents of the ticket object 22 are not delivered in the clear to the embedded ticket agent 42-1. Instead, the master ticket agent 42-2 acts as a go-between for the embedded ticket agent 42-1 and the DRM agent 12, i.e., the embedded ticket agent 41-1 controls the usage of the ticket object 22, but it is the master ticket agent 42-2 that executes operations on the ticket object 22. Such shielding of sensitive ticket data is advantageous where the embedded ticket agent 42-1 is extracted from the composite ticket object 22, for execution in a non-secure/non-trusted environment.

In any case, as part of an overall ticketing process, the TI 18 communicates to the RI 16 that a license according to a given ticket purchase is to be downloaded to the electronic device 10. Correspondingly, the RI 16 runs a defined license download protocol. The protocol is defined by the particular DRM solution that is in place, e.g., Wireless Application Protocol (WAP) Push for OMA DRM 1.0 or Rights Object Acquisition Protocol (ROAP) for OMA DRM 2.0/2.1. Regardless, ticket acquisition is completed, and the electronic device 10 stores a ticket object 22 and a corresponding rights object 30, which carries usage license information for redeeming or otherwise using the ticket. This information is protected by the networked DRM system, including the DRM server 14/DRM agent 12.

In that regard, the protocols run between the electronic device 10, the TI 18, and the RI 16, respectively, are the "standard" implementations defined by the DRM solution used. It is not necessary that the DRM agent 12 knows or is otherwise aware that the ticket object 22 is a redeemable electronic ticket. Indeed, in an advantageous implementation, the ticket object 22 and the associated rights object 30 are formatted according to the standard DRM solution, meaning that they are handled by the DRM agent 12 in the same manner that it handles other DRM-restricted objects.

Thus, as shown in Fig. 7, the rights object 30 contains a Content Identifier (CID) 60, which is a typical component in DRM solutions for creating a logical binding between license and content. There is also the Usage Rights (UR) element 62 that describes the constraints by which the ticket may be used, and the Content Encryption Key (CEK) 64 that is used to decrypt the ticket object 22. Note that the CEK 64 may be the same content key 28 introduced in Fig. 1.

For most DRM systems, the CEK 64 is encrypted by a key private to the DRM agent 12 directly, or via intermediate keys, e.g., the DRM key 32 shown in Fig. 1. However, there are also DRM systems, e.g., OMA DRM 1.0, which rely on a secure channel for the transmission of the rights object 30. Also, note that there may be additional rights object fields, such as fields containing digital signatures or similar data, for use by the DRM agent 12 in verifying the integrity of the rights object 30 and/or ticket object 22.

Further, the ticket object 22 (either 22-1 or 22-2 embodiments) carry the same CID 60 as in the rights object 30, and there is a MIME-type 70 describing the media type of the decrypted data found in the Default Ticket Proof (DTP) 72 component-this MIME-type field is accessible by the DRM agent 12, and it should not be confused with the MIME-type field typically found in the DRM metadata, which is in the non-encrypted part of the DRM object and describes the protected file as containing a ticket object. This latter MIME-type information is accessible by the DRM agent 42. There is also information related to the encryption of the DTP 72, the encryption algorithm used (Algo) 74, the ticket key Identifier (TKID) 76, the Ticket Key (TK) 26 (as introduced in Fig. 1), and an Initialization Vector (IV) 78. All such components except the CID 60 are encrypted by the CEK 64, and the DTP 72 is further encrypted by the TK 26. Still further, the ticket object 22-2 contains the executable code of the embedded ticket agent 42-1, which is also protected by the DRM system.

In at least one embodiment, the storage of ticket objects 22 is controlled by the ticket agent 42. For example, the ticket agent 42 maintains a database indicating where the ticket objects 22 are stored within a file system of the electronic device. In at least one such embodiment, the database includes a ticket ID field for storing the ticket IDs 50 of the stored ticket objects 22. The ticket ID 50 is a generic identifier for the event that the ticket applies to, and when the ticket agent 42 receives this identifier from the ticket verifier 42 it uses it to search the database to find the corresponding ticket object 22. To establish and maintain a logical binding between a ticket ID 50 and a ticket object 22, it is advantageous that the ticket object 22 contains the ticket ID 50. This configuration can be realized in several ways. For example, the ticket ID 50 can be part of the CID 60, which could have an initial part indicating the event, or it could be placed in some other DRM metadata field.

While the ticket agent 42 may handle storage of received ticket objects 22, in one or more embodiments the DRM agent 12 handles storage of the corresponding rights objects 30. For example, the DRM agent 12 maintains a database indicating where the rights objects 30 are stored. This rights objects database includes or is otherwise indexed according to a CID field. That is, one or more embodiments of the ticket agent 42 use ticket IDs 50 to retrieve or reference the corresponding ticket objects 22, and one or more embodiments of the DRM agent 12 parse out the CIDs 60 from ticket objects 22, and use such information to retrieve the corresponding rights objects 30.

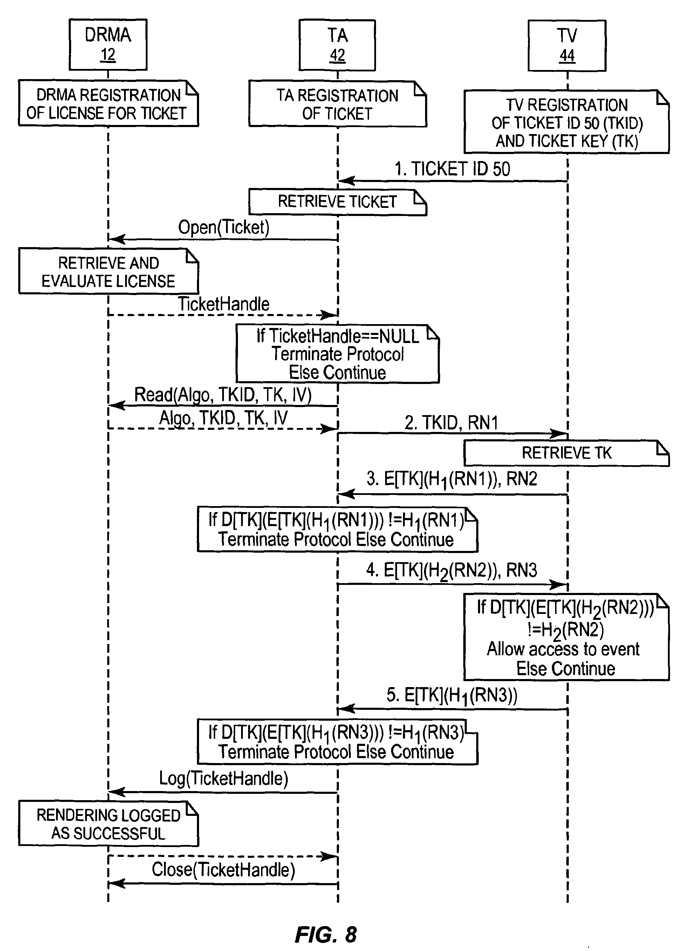

With the above data elements, a number of approaches to ticket verification are contemplated. Fig. 8 provides a detailed, but non-limiting verification example, and it assumes that the electronic device 10 and its user are at a given event, for which electronic ticket redemption is required. Fig. 8 assumes that the ticket verifier 44 is an electronic system, and further assumes that the ticket verifier 44 has securely received Algo 74, TKID 76, TK 26, IV 78, and ticket ID 50 directly or indirectly from the TI 18.

The ticket verifier 44 and the electronic device 10 establish a connection - e.g., local link 46, shown in Fig. 1 - over which the ticket verification protocol will be run. This connection can be of any type, but typically it is a short range wireless connection, e. g. Bluetooth, or NFC. As the data sent over the connection is adequately secured, the connection itself need not be secured. With the above context in mind, the example verification process includes:
Step 1: the ticket verifier 44 initiates the redemption protocol by sending the ticket ID 50 to the ticket agent 42 in the electronic device 10.
Step 2: the ticket agent 42 uses the ticket ID 50 to retrieve the corresponding ticket object 22. For example, it identifies the correct stored ticket object 22 to retrieve, based on the ticket ID 50, and it requests that the DRM agent 12 render that particular ticket object 22. To do so, the DRM agent 12 parses out the CID 60 from the targeted ticket object 22 and retrieves the associated rights object 30 by searching its database for a matching CID. Upon finding the matching rights object 30, the DRM agent 12 checks the usage rights to validate that rendering is allowed. If so, the DRM agent 12 passes the decrypted contents of the ticket object 22 to the ticket agent 42. If the usage rights do not allow a rendering, then the ticket agent 42 must contact the TI 18 to update the rights to the ticket object 22. Notably, these actions by the DRM agent 12 are the same as it performs when rendering any other type of content, e.g. an MP3 sound file, and the ticket redemption processing thus adds no new requirements to the "standard" DRM processing done by the DRM agent 12.
Step 3: assuming that the ticket object 22 was rendered by the DRM agent 12, the ticket agent 42 responds to the ticket verifier's initiation message by sending the TKID 76 and a random number RN1 to the ticket verifier 44.
Step 4: the ticket verifier 44 uses the TKID 76 to retrieve a matching key from its database-i.e., it retrieves a match to the TK 26. Note, however, that using the TKID 76 in this manner also provides the possibility to use several different keys within the same ticket application, meaning that different keys could be used for accessing different areas/facilities within a given event. Further, the ticket verifier 44 modifies RN1 according to some predefined function H₁, which may, e.g., be a secure hash function like SHA1, to obtain H₁ (RN1). It then encrypts H₁(RN1) and sends E[TK]( H₁(RN1)) together with another random value RN2.
Step 5: the ticket agent 42 decrypts E[TK]( H₁(RN1)) and checks that it matches the H₁(RN1) computed by the ticket agent 42, based on the earlier sent RN1. If there is not a match, the ticket verifier 44 does not have the correct TK 26, or the connection has failed in some other way. In either case, such a failure results in termination of the redemption process.
Step 6: if the Step 5 checking produces a match, the ticket agent 42 modifies RN2 according to some predefined function H₂, different from H₁. The ticket agent 42 then encrypts the H₂(RN2) value to E[TK](H₂(RN2)), and sends it together with another random value RN3.
Step 7: the ticket verifier 44 decrypts E[TK](H₂(RN2)), as received from the ticket agent 42, and checks whether it matches H₂(RN2) calculated using the earlier sent RN2. If the check produces a match, the TK 26 in the possession of the electronic device 10 is verified.

Even if the device's ticket key 26 is verified, the ticket verifier 44 may perform additional checks, for a final positive verification. For example, the ticket verifier 44 may keep track of how many ticket objects 22 that have been redeemed, and compare that number to a total authorization, or to some other admission limit. Thus, final verification may involve determining whether the current verification would exceed the allowed number of verifications. If the final verification is negative, the ticket verifier 44 encrypts the RN3 to E[TK](H₁(RN3)) and sends this to ticket agent 42.

If the ticket agent 42 receives a message with E[TK](H₁(RN3)), and this matches with the sent RN3, then it does not request the DRM agent 12 to log the ticket redemption as successful. Conversely, if final redemption verifications are successful by the ticket verifier 44, and hence the message with E[TK](H₁(RN3)) is not sent, the ticket agent 42 requests that the DRM agent 12 log the redemption. The ticket agent 42 should preferably wait for some time to allow for a message from the ticket verifier 44 to arrive, before logging the redemption as successful. Such logging allows, for example, redemption/usage count data to be recorded for the ticket object 22 that was redeemed, such as where the ticket object 22 is a multi-use ticket.

Other redemption processing variations are used if the ticket verifier 44 is a human operator. For example, the verification and counter-verification data shown in the process flow of Fig. 8 may be replicated, at least to some extent, based on the human operator providing input to the user interface 48 of the electronic device 10, and receiving output from the user interface 48, e.g., the human operator may interact with the electronic device 10 via its keyboard and receive output from the electronic device 10 via display output and/or speaker output.

It is assumed that the human operator has in some way securely received the ticket ID 50 of a given ticket object 22, which, for practicality here, should be human-readable, and has also received pairs of values for RN, and E[TK](RN), for each of the TKs 26 that are implicated in redemption of the given ticket object 22 - each such TK 26 represented by a corresponding TKID 76. The human operator is also informed about how a rendering of the DTP 72 shall be perceived. Of course, it is assumed that the ticket agent 42 and DRM agent 12 have downloaded and registered the given ticket object 22 to be redeemed, along with its associated rights object 30. Further, it should be noted that the human operator of the device 10 and the (human) ticket verifier may be responsible for handling at least some aspect of mutual authentication.

More details associated with presenting redemption protocol parameters for ticket redemption via a human operator appear below. Note that such given parameters are presented in human-readable format, such as through the use of base-64 encoding. As a first step of redemption, the human operator inputs the ticket ID 50 into the electronic device 10. This input can be via keypad, or by swiping a fob, etc. Also, note that the device owner has already initiated ticket redemption processing on the electronic device 10, so that the input will be understood as a ticket ID 50, or the human operator responsible for verification has initiated such processing on the electronic device 10.

The ticket agent 42 receives the ticket ID 50 in electronic format, and uses it to identify the ticket object 22 targeted for redemption. The ticket agent 42 requests that the DRM agent 12 open a rendering session for the targeted ticket object 22. The DRM agent 12 parses out the CID 60 from the ticket object 22, and searches its database for a matching license. The DRM agent 12 then returns a ticket handle to the ticket agent 42, which is set to NULL (or some other non-use value) if the rights object 30 corresponding to the targeted ticket object 22 indicates that redemption is not permitted. Conversely, the ticket handle is set to a valid handle value if redemption is permissible within the usage constraints imposed by the rights object 30. Assuming the ticket handle indicates that redemption is permitted, the ticket agent 42 then retrieves all the ticket data (i.e MIME 70, Algo 74, TKID 76, TK 26, IV 78, and E[TK](DTP)). The ticket agent 42 then uses the Algo 74, TK 26, and IV 78 to decrypt the E[TK](DTP) and obtain the DTP 72. Further, the ticket agent 42 analyzes the MIME 70 to determine how the DTP 72 is to be rendered for verification by the human operator. For example, the rendering information as directed by the MIME 70 may specify the output of a static or dynamic image (picture or video) on a display screen of the user interface 48 of the electronic device 10. Additionally or alternatively, the rendering information may specify the output of particular sounds or tones - e.g., a sound clip - via a speaker included in the user interface 48 of the electronic device 10.

In any case, the ticket agent 42 presents the DTP 72 as directed by the rendering information in the MIME 70, and it also may display the TKID 76 on the electronic device's display, such as by presenting the TKID as an overlay on the redemption image/pattern being displayed. Correspondingly, the human operator verifies the electronic device's rendering of the DTP. If that verification is successful - e.g., if the correct image/pattern was displayed - the human operator may consult a (secret) table of random numbers, and corresponding encrypted E[TK]( RN) values, for the TKID 76 presented on the electronic device's display. From such data, which may be printed in table form or provided in a "slide rule" type print out, the human operator selects the appropriate RN2 and keys, swipes or otherwise enters that value into the electronic device 10.

In response, the ticket agent 42 encrypts the RN2 and presents the encrypted value on the electronic device's display in a human-readable format, e.g., as a base64 encoded value. The human operator then compares this encrypted result with the corresponding value in his or her printed information. If the encrypted result is correct, the human operator considers redemption successful and correspondingly grants access to the user of the electronic device 10.

Further, assuming that access is granted, the human operator pushes a key on the electronic device 10, or otherwise inputs to the electronic device 10, an indication of success ticket object redemption. In response to receiving the indication of successful ticket redemption, the ticket agent 42 sends a log request to the DRM agent 12, to indicate the successful ticket redemption. In response, the DRM agent 12 updates the license logging data in its database.

On the other hand, if ticket redemption was not successful, the human operator inputs an indication of that failure to the electronic device 10. In response to that indication, the ticket agent 42 directly or indirectly closes the DRM agent's redemption session for the given ticket object 22, without a redemption logging request.

Further, and this additional example detail applies whether the ticket verifier 44 is a human operator or an electronic verification system, the DRM agent 12 and the ticket agent 42 can be separated into different devices/entities. For example, the ticket agent 42 is located in the electronic device 10, and the DRM agent 12 is located in device owner's PC or home network gateway device. In this case, the separated DRM agent 12 and ticket agent 42 preferably are configured to implement a secure protocol for exchanging data between them. In an advantageous embodiment, the secure protocol is based on the provisioning of a shared secret or asymmetric key pair in the two devices respectively holding the DRM agent 12 and the ticket agent 42.

Given that the two devices are, as a general proposition, owned or controlled by the same user, a convenient offline provisioning of the shared secret/key pair can be performed by the user, such as by keyboard/keypad entry. Of course, PKI based private/public key cryptography may be used as an alternative, but PKI based security generally imposes a higher computational burden on the devices, as compared to shared secret/key pair protocols.

Of course, the present invention is not limited by the foregoing description, or by the accompanying drawings. Indeed, the present invention is limited only by the following appended claims and their legal equivalents.

## Claims

1. A method of electronic ticket processing, comprising the steps of: receiving, a ticket object (22) that includes a ticket key (26) encrypted with a content encryption key (28) according to a networked pre-existing digital rights management system;
receiving a rights object (30) compatible with said digital rights management system, and including one or more usage restrictions corresponding to the ticket object (22) and including the content encryption key (28) encrypted with a digital rights management key (32) associated with a digital rights management agent (12) installed in an electronic device (10) in which the ticket object (22) and the rights object (30) are received, the digital rights management agent (12) operating as part of the networked pre-existing digital rights management system; and
redeeming said ticket object (22), using at least one ticket agent (42) installed in said electronic device (10), by:
requesting, by the ticket agent, the digital rights management agent (12) to check the rights object (30) for usage restrictions and, if ticket usage is permitted, to decrypt the ticket object (22); wherein the ticket object (22) and the associated rights object (30) are formatted according to said pre-existing digital rights management system and are handled by the digital rights management agent (12) in the same manner that it handles other digital rights management restricted objects;
retrieving, by the ticket agent, said ticket key (26) from the digital rights management agent (12), subject to the one or more usage restrictions;
communicating, by the ticket agent, with an external agent according to a predefined verification protocol, to verify possession of the ticket key (26), without exposing the ticket key (26) to the external agent.

2. The method of claim 1, wherein communicating with the external agent to verify possession of the ticket key (26) comprises using a shared secret or an asymmetric key pair to verify possession of the ticket key (26) to the external agent.

3. The method of claim 1, wherein receiving the ticket object (22) comprises receiving a composite ticket object (22) that includes an embedded ticket agent (42-1) and the ticket key (26), both protected by the content encryption key (28), and wherein redeeming said ticket object (22) includes retrieving the embedded ticket agent (42-1) and the ticket key (26) from the digital rights management agent (12), and using the embedded ticket agent (42-1) to communicate with the external agent according to the predefined verification protocol.

4. The method of claim 3, further comprising using a master ticket agent (42-2) installed at the electronic device (10) to retrieve the embedded ticket agent (42-1) and the ticket key (26) from the digital rights management agent (12), install or otherwise initiate the embedded ticket agent (42-1), and provide the embedded ticket agent (42-1) with a reference to the ticket key (26), for use in redeeming the ticket key (26) by the embedded ticket agent (42-1), while retaining the ticket key (26) securely under control of the master ticket agent (42-2).

5. The method of claim 1, wherein receiving the ticket object (22) comprises receiving a content file that is tagged or otherwise packaged according to a predefined digital rights management format, for handling as a rights-managed object by the digital rights management agent (12).

6. The method of claim 1, wherein the external agent comprises an electronic verification system, and wherein redeeming the ticket object (22) comprises generating verification information (54) for the electronic verification system and verifying counter-verification information (56) from the electronic verifier system, based on using the ticket key (26) as a shared secret between the ticket agent (42) and the electronic verification system.

7. The method of claim 6, further comprising sending the verification information (54) to the electronic verification system and receiving the counter-verification information (56) from the electronic verification system, via a local communication interface (46) between the electronic device (10) and the electronic verification system.

8. The method of claim 6, wherein redeeming the ticket object (22) includes the ticket agent (42) receiving a ticket identifier (50) from the electronic verification, the ticket identifier (50) corresponding to the ticket object (22), the ticket agent (42) passing the ticket identifier (50) to the digital rights management agent (12) and receiving the ticket key (26) and an encryption algorithm (58) in return, and the ticket agent (42) using the ticket key (26) and the encryption algorithm (58) to generate the verification information (54) for the electronic verification system.

9. The method of claim 1, wherein the external agent comprises a human operator, and wherein redeeming the ticket object (22) comprises the ticket agent (42) receiving a ticket identifier (50) via a user interface (48) of the electronic device (10), the ticket agent (42) passing the ticket identifier (50) to the digital rights management agent (12) and receiving the ticket key (26) and ticket rendering information (52) in return, and the ticket agent (42) rendering ticket information in a human-verifiable format via the user interface (48) of the electronic device (10), in accordance with the rendering information.

10. An electronic device (10) having a digital rights management agent (12) installed therein, said digital rights management agent (12) for use in a networked pre-existing digital rights management system, said electronic device (10) comprising:
one or more communication interfaces (20) for receiving a ticket object (22) that includes a ticket key (26) encrypted with a content encryption key (28) according to the digital rights management system, and for receiving a rights object (30) compatible with said digital rights management system, and including one or more usage restrictions corresponding to the ticket object (22) and including the content encryption key (28) encrypted with a digital rights management key (32) associated with the digital rights management agent (12);
memory (34) for storing the ticket object (22) and the rights object (30); and
one or more processing circuits (40) operatively associated with the one or more communication interfaces (20) and the memory (34), and configured to implement the digital rights management agent (12), and to implement at least one ticket agent (42) that is configured to redeem the ticket object (22) based on:
requesting the digital rights management agent (12) to check the rights object (30) for usage restrictions and, if ticket usage is permitted, to decrypt the ticket object (22); wherein the ticket object (22) and the associated rights object (30) are formatted according to said pre-existing digital rights management system and are handled by the digital rights management agent (12) in the same manner that it handles other digital rights management restricted objects;
retrieving the ticket key (26) from the digital rights management agent (12), subject to the one or more usage restrictions; and
communicating with an external agent according to a predefined verification protocol, to verify possession of the ticket key (26), without exposing the ticket key (26) to the external agent.

11. The electronic device (10) of claim 10, wherein the ticket agent (42) is configured to use a shared secret or an asymmetric key pair to verify possession of the ticket key (26) to the external agent.

12. The electronic device (10) of claim 10, wherein the ticket object (22) comprises a composite ticket object (22) that includes an embedded ticket agent (42-1) and the ticket key (26), both protected by the content encryption key (28), and wherein the one or more processing circuits (40) are configured to redeem said ticket object (22) by retrieving the embedded ticket agent (42-1) and the ticket key (26) from the digital rights management agent (12), and using the embedded ticket agent (42-1) to communicate with the external agent according to the predefined verification protocol.

13. The electronic device (10) of claim 12, wherein the one or more processing circuits (40) are configured to implement a master ticket agent (42-2), and wherein the master ticket agent (42-2) is configured to retrieve the embedded ticket agent(42-1) and the ticket key (26) from the digital rights management agent (12), install or otherwise initiate the embedded ticket agent (42-1), and provide the embedded ticket agent (42-1) with a reference to the ticket key (26), for use in redeeming the ticket key (26) by the embedded ticket agent (42-1), while retaining the ticket key (26) securely under control of the master ticket agent (42-2).

14. The electronic device (10) of claim 10, wherein the ticket object (22) comprises a content file that is tagged or otherwise packaged according to a predefined digital rights management format, for handling as a rights-managed object by the digital rights management agent (12).

15. The electronic device (10) of claim 10, wherein the electronic device is adapted for communicating with an external agent comprising an electronic verification system, and wherein the ticket agent (42) is configured to redeem the ticket object (22) by generating verification information (54) for the electronic verification system and verifying counter- verification information (56) from the electronic verifier system, based on using the ticket key (26) as a shared secret between the ticket agent (42) and the electronic verification system.

16. The electronic device (10) of claim 15, wherein the ticket agent (42) is configured to use a local communication interface (46), as one of the one or more communication interfaces (20), for sending the verification information (54) to the electronic verification system and receiving the counter- verification information (56) from the electronic verification system.

17. The electronic device (10) of claim 15, wherein the ticket agent (42) is configured to redeem the ticket object (22) responsive to receiving a ticket identifier (50) from the electronic verification, the ticket identifier (50) corresponding to the ticket object (22), and wherein the ticket agent (42) is configured to pass the ticket identifier (50) to the digital rights management agent (12) and receive the ticket key (26) and an encryption algorithm (58) in return, and to use the ticket key (26) and the encryption algorithm (58) to generate the verification information (54) for the electronic verification system.

## Patentansprüche

1. Ein Verfahren zur elektronischen Ticketbearbeitung, das folgende Schritte umfasst:
- Empfang eines Ticket-Objekts (22), das einen Ticketschlüssel (26) umfasst, der mit einem Content-Encryption-Code (28) gemäß eines zuvor existierenden Digital Rights Management-System verschlüsselt worden ist; Empfang eines Rechtsobjekts (30), das kompatibel mit dem besagten Digital Rights Management-System ist und eine oder mehrere Nutzerrestriktionen enthält, die dem Ticket-Objekt (22) entsprechen und den Content-Encryption-Code (28) umfassen, der mit einem Digital Rights Management-Schlüssel (32) im Zusammenhang mit einem Digital Rights Management-Agenten (12) in einer elektronischen Vorrichtung (10) installiert ist, in der das Ticket-Objekt (22) und das Rechtsobjekt (30) empfangen werden, und wo der Digital Rights Management-Agent (12) als Teil eines vernetzten, zuvor existierenden Digital Rights Management-System funktioniert; und
- Einlösung des besagten Ticket-Objekts (22) unter Verwendung von mindestens einem Ticket-Agenten (42), der in besagter elektronischen Vorrichtung (10) installiert ist, in der:
- der Digital Rights-Management-Agent (12) durch den Ticket-Agenten angewiesen wird, die Rechtsobjekte (30) auf Nutzerrestriktionen zu überprüfen und, wenn die Ticketnutzung erlaubt ist, das Ticket-Objekt (22) zu entschlüsseln; wobei das Ticket-Objekt (22) und das assoziierte Rechtsobjekt (30) gemäß dem besagten, zuvor existierenden Digital Rights Management-System formatiert sind und vom Digital Rights Management-Agenten (12) auf die gleiche Weise behandelt werden, als bearbeitete er andere, limitierte Objekte des Digital Rights Managements;
- Wiederauffindung, durch den Ticket-Agenten, des besagten Ticket-Schlüssels (26) vom Digital Rights Management-Agenten (12), der einer oder mehreren Nutzerrestriktionen untersteht;
- Kommunikation, durch den Ticket-Agenten, an einen externen Agenten gemäß eines vorgegebenen Prüfprotokolls, um den Besitz des Ticketschlüssels (26) zu prüfen, ohne den Ticketschlüssel (26) dem externen Agenten offenzulegen.

2. Das Verfahren gemäß Anspruch 1, wobei die Kommunikation mit dem externen Agenten zur Überprüfung des Besitzes des Ticketschlüssels (26) die Verwendung eines gemeinsamen Geheimnisses oder eines asymmetrischen Schlüsselpaars umfasst, um den Besitz des Ticketschlüssels (26) seitens des externen Agenten zu prüfen.

3. Das Verfahren gemäß Anspruch 1, wobei der Empfang des Ticket-Objektes (22) den Empfang eines Komposit-Ticket-Objektes (22), welches einen eingebetteten Ticket-Agenten (42-1) umfasst, und des Ticketschlüssels (26) umfasst, wobei beide vom Content-Encryption-Schlüssel (28) geschützt sind und wobei die Einlösung des besagten Ticket-Objektes (22) die Wiederauffindung des eingebetteten Ticket-Agenten (42-1) und des Ticket-Schlüssels (26) von dem Digital Rights Management-Agenten (12) und die Verwendung des eingebetteten Ticket-Agenten (42-1) zur Kommunikation mit dem externen Agenten gemäß dem vorgegebenen Prüfprotokolls umfasst.

4. Das Verfahren gemäß Anspruch 3, das darüber hinaus die Verwendung eines Master-Ticket-Agenten (42-2) umfasst, der an der elektronischen Vorrichtung (10) angeschlossen ist, um den eingebetteten Ticket-Agenten (42-1) und den Ticket-Schlüssel (26) vom Digital Rights Management-Agenten (12) wiederaufzufinden, den eingebetteten Ticket-Agenten (42-1) zu installieren oder sonst zu initiieren und den eingebetteten Ticket-Agenten (42-1) mit einem Bezug zum Ticket-Schlüssel (26) zur Verwendung in der Einlösung des Ticketschlüssels (26) durch den eingebetteten Ticket-Agenten (42-1) bereitzustellen, während der Ticket-Schlüssel (26) sicher unter Kontrolle des Master-Ticket-Agenten (42-2) gehalten wird.

5. Das Verfahren gemäß Anspruch 1, wobei der Empfang des Ticket-Objekts (22) den Empfang einer Inhaltsdatei umfasst, die gemäß eines vorgegebenen Digital Rights Management-Formats zur Verwendung als Rights Managed Objekt durch den Digital Rights Management-Agenten (12) gekennzeichnet oder verpackt ist.

6. Das Verfahren gemäß Anspruch 1, wobei der externe Agent ein elektronisches Prüfsystem umfasst, und wo die Einlösung des Ticket-Objektes (22) die Erstellung von Prüfungsinformationen (54) für das elektronische Prüfsystem und die Überprüfung von Gegenprüfungsinformationen (56) aus dem elektronischen Prüfsystem, basierend auf der Verwendung des Ticketschlüssels (26) als geteiltes Geheimnis zwischen dem Ticket-Agenten (42) und dem elektronischen Prüfsystem umfasst.

7. Das Verfahren gemäß Anspruch 6, das darüber hinaus die Übermittlung der Prüfungsinformationen (54) an das elektronische Prüfsystem und den Empfang der Gegenprüfungsinformationen (56) vom elektronischen Prüfsystem über eine lokale Kommunikationsschnittstelle (46) zwischen der elektronischen Vorrichtung (10) und dem elektronischen Prüfsystem umfasst.

8. Das Verfahren gemäß Anspruch 6, wobei die Einlösung des Ticket-Objekts (22) den Ticket-Agenten (42) enthält, der eine Ticketidentifizierung (50) vom elektronischen Prüfsystem empfängt, wo die Ticketidentifizierung (50) dem Ticket-Objekt (22) entspricht und der Ticket-Agent (42) die Ticketidentifizierung (50) an den Digital Rights Management-Agenten (12) übermittelt und im Gegenzug den Ticket-Schlüssel (26) und einen Verschlüsselungsalgorithmus (58) empfängt, und wo der Ticket-Agent (42) den Ticket-Schlüssel (26) und den Verschlüsselungsalgorithmus (58) verwendet, um die Prüfungsinformationen (54) für das elektronische Prüfsystem zu generieren.

9. Das Verfahren gemäß Anspruch 1, wobei der externe Agent einen menschlichen Bediener umfasst, und wo die Einlösung des Ticket-Objekts (22) den Empfang seitens des Ticket-Agenten (42) einer Ticketidentifizierung (50) über einer Nutzerschnittstelle (48) der elektronischen Vorrichtung (10) umfasst, wo der Ticket-Agent (42) die Ticketidentifizierung (50) an den Digital Rights Management-Agenten (12) übermittelt und den Ticket-Schlüssel (26) und die Ticket-Abgabe-Informationen (52) im Gegenzug erhält, und wo der Ticket-Agent (42) die Ticket-Informationen in einem menschlich verifizierbaren Format über die Nutzerschnittstelle (48) der elektronischen Vorrichtung (10) gemäß den Abgabeinformationen ausgibt.

10. Eine elektronische Vorrichtung (10) mit einem dort installierten Digital Rights Management-Agenten (12), wobei besagter Digital Rights Management-Agent (12) in einem vernetzten zuvor existierenden Digital Rights Management-System verwendet wird, und wo besagte elektronische Vorrichtung (10) folgendes umfasst:
- Eine oder mehrere Kommunikationsschnittstellen (20) zum Empfang eines Ticket-Objekts (22), enthaltend einen, mit einem Content-Encryption-Schlüssel (28) gemäß DRM-System verschlüsselten Ticket-Schlüssel (26), und zum Empfang eines mit dem besagten DRM-System kompatiblen Rechtsobjekts (30), und enthaltend eine oder mehrere, dem Ticket-Objekt (22) entsprechenden Nutzerrestriktionen, und enthaltend den Content-Encryption-Schlüssel (28), der mit einem DRM-Schlüssel (32) im Zusammenhang mit dem Digital Rights Management-Agenten (12) verschlüsselt ist;
- einen Speicher (34) zum Speichern des Ticket-Objekts (22) und des Rechtsobjekts (30);
- und einen oder mehrere Verarbeitungsschaltkreis(e) (40), der/die betriebsbereit im Zusammenhang mit der einen oder den mehreren Kommunikationsschnittstellen (20) und dem Speicher (34) steht/stehen, und so konfiguriert ist/sind, um den Digital Rights Management-Agenten (12) zu implementieren, und mindestens einen Ticket-Agenten (42) zu implementieren, der konfiguriert ist, um das Ticket-Objekt (22) auf folgender Grundlage auszulösen:
- Anweisung an den Digital Rights-Management-Agenten (12), um das Rechtsobjekt (30) auf Nutzerrestriktionen zu überprüfen und, wenn die Ticketnutzung erlaubt ist, das Ticket-Objekt (22) zu entschlüsseln; wobei das Ticket-Objekt (22) und das assoziierte Rechtsobjekt (30) gemäß dem besagten zuvor existierenden Digital Rights Management-System formatiert sind, und vom Digital Rights Management-Agenten (12) auf die gleiche Weise behandelt werden, als handele er andere, limitierte Objekte des Digital Rights Managements;
- Wiederauffindung des Ticket-Schlüssels (26) vom Digital Rights-Agenten (12), der einer oder mehreren Nutzerrestriktionen untersteht; und
- Kommunikation an einen externen Agenten gemäß eines vorgegebenen Prüfprotokolls, um den Besitz des Ticketschlüssels (26) zu prüfen, ohne den Ticketschlüssel (26) dem externen Agenten offenzulegen.

11. Die elektronische Vorrichtung (10) gemäß Anspruch 10, wobei der Ticket-Agent (42) konfiguriert ist, ein gemeinsames Geheimnisses oder ein asymmetrisches Schlüsselpaar zu verwenden, um den Besitz des Ticketschlüssels (26) seitens des externen Agenten zu prüfen.

12. Die elektronische Vorrichtung (10) gemäß Anspruch 10, wobei das Ticket-Objekt (22) ein Komposit-Ticket-Objekt (22) umfasst, welches einen eingebetteten Ticket-Agenten (42-1) und den Ticketschlüssel (26) umfasst, wobei beide vom Content-Encryption-Schlüssel (28) geschützt sind und wobei der eine oder die mehreren Verarbeitungsschaltkreise (40) konfiguriert sind, um die Einlösung des besagten Ticket-Objektes (22) durch die Wiederauffindung des eingebetteten Ticket-Agenten (42-1) und des Ticket-Schlüssels (26) vom Digital Rights Management-Agenten (12) und durch Verwendung des eingebetteten Ticket-Agenten (42-1) zur Kommunikation mit dem externen Agenten gemäß dem vorgegebenen Prüfprotokolls vorzunehmen.

13. Die elektronische Vorrichtung (10) gemäß Anspruch 12, wobei der eine oder die mehreren Verarbeitungsschaltkreise (40) konfiguriert sind, um einen Master-Ticket-Agenten (42-2) zu implementieren, und wobei der Master-Ticket-Agent (42-2) konfiguriert ist, um den eingebetteten Ticket-Agenten (42-1) und den Ticket-Schlüssel (26) vom Digital Rights Management-Agenten (12) wiederaufzufinden, den eingebetteten Ticket-Agenten (42-1) zu installieren oder anderweitig zu initiieren, und den eingebetteten Ticket-Agenten (42-1) mit einem Bezug zum Ticket-Schlüssel (26) zur Verwendung in der Einlösung des Ticketschlüssels (26) durch den eingebetteten Ticket-Agenten (42-1) bereitzustellen, während der Ticket-Schlüssel (26) sicher unter Kontrolle des Master-Ticket-Agenten (42-2) gehalten wird.

14. Die elektronische Vorrichtung (10) gemäß Anspruch 10, wobei das Ticket-Objekt (22) eine Inhaltsdatei umfasst, die gemäß eines vorgegebenen Digital Rights Management-Format zur Verwendung als Rights Managed-Objekt durch den Digital Rights Management-Agenten (12) gekennzeichnet oder verpackt ist.

15. Die elektronische Vorrichtung (10) gemäß Anspruch 10, wo die elektronische Vorrichtung geeignet ist, mit einem ein elektronisches Prüfsystem umfassenden externen Agenten zu kommunizieren, und wobei der Ticket-Agent (42) konfiguriert ist, um das Ticket-Objekt (22) einzulösen, indem Prüfungsinformationen (54) für das elektronische Prüfsystem generiert werden und durch Gegenprüfungsinformationen (56) aus dem elektronischen Prüfsystem überprüft werden, basierend auf der Verwendung des Ticket-Schlüssels (26) als gemeinsames Geheimnis zwischen dem Ticket-Agenten (42) und dem elektronischen Prüfsystem.

16. Die elektronische Vorrichtung (10) gemäß Anspruch 15, wobei der Ticket-Agent (42) konfiguriert ist, um eine lokale Kommunikationsschnittstelle (46) als eine der einen oder mehreren Kommunikationsschnittstellen (20) zur Übermittlung der Prüfungsinformationen (54) an das elektronische Prüfsystem und zum Empfang der Gegenprüfungsinformationen (56) aus dem elektronischen Prüfsystem zu verwenden.

17. Die elektronische Vorrichtung (10) gemäß Anspruch 15, wobei der Ticket-Agent (42) konfiguriert ist, um das Ticket-Objekt (22) in Beantwortung des Empfangs einer Ticketidentifizierung (50) vom elektronischen Prüfsystem einzulösen, wo die Ticketidentifizierung (50) dem Ticket-Objekt (22) entspricht und wo der Ticket-Agent (42) konfiguriert ist, um die Ticketidentifizierung (50) an den Digital Rights Management-Agenten (12) zu übermitteln und im Gegenzug den Ticket-Schlüssel (26) und einen Verschlüsselungsalgorithmus (58) zu empfangen, und den Ticket-Schlüssel (26) und den Verschlüsselungsalgorithmus (58) zu verwenden, um die Prüfungsinformationen (54) für das elektronische Prüfsystem zu generieren.

## Revendications

1. Procédé de traitement de billet électronique, comprenant les étapes de :
réception d'un objet formant billet (22) qui inclut une clé de billet (26) chiffrée avec une clé de chiffrage de contenu (28) selon un système de gestion de droits numériques préexistants en réseau ;
réception d'un objet formant droits (30) compatible avec ledit système de gestion de droits numériques et incluant une ou plusieurs restrictions d'utilisation correspondant à l'objet formant billet (22) et incluant la clé de chiffrage de contenu (28) chiffrée avec une clé de gestion de droits numériques (32) associée à un agent de gestion de droits numériques (12) installé dans un dispositif électronique (10) dans lequel l'objet formant billet (22) et l'objet formant droits (30) sont reçus, l'agent de gestion de droits numériques (12) fonctionnant comme une partie du système de gestion de droits numériques préexistants en réseau ; et
remboursement dudit objet formant billet (22), en utilisant au moins un agent de billet (42) installé dans ledit dispositif électronique (10), en :
demandant, par l'agent de billet, à l'agent de gestion de droits numériques (12) de vérifier l'objet formant droits (30) en ce qui concerne des restrictions d'utilisation et, si l'utilisation de billet est autorisée, de déchiffrer l'objet formant billet (22) ; dans lequel l'objet formant billet (22) et l'objet formant droits associés (30) sont formatés selon ledit système de gestion de droits numériques préexistants et sont manipulés par l'agent de gestion de droits numériques (12) de la même manière qu'il manipule d'autres objets restreints de gestion de droits numériques ;
récupérant, par l'agent de billet, ladite clé de billet (26) à partir de l'agent de gestion de droits numériques (12), soumis à la ou aux plusieurs restrictions d'utilisation ;
communiquant, par l'agent de billet, avec un agent externe selon un protocole de vérification prédéterminé, pour vérifier la possession de la clé de billet (26), sans exposer la clé de billet (26) à l'agent externe.

2. Procédé selon la revendication 1, dans lequel la communication avec l'agent externe pour vérifier la possession de la clé de billet (26) comprend l'utilisation d'un secret partagé ou d'un couple de clés asymétrique pour vérifier la possession de la clé de billet (26) par l'agent externe.

3. Procédé selon la revendication 1, dans lequel la réception de l'objet formant billet (22) comprend la réception d'un objet formant billet composite (22) qui inclut un agent de billet incorporé (42-1) et la clé de billet (26), tous les deux protégés par la clé de chiffrage de contenu (28), et dans lequel le remboursement dudit objet formant billet (22) inclut la récupération de l'agent de billet incorporé (42-1) et de la clé de billet (26) à partir de l'agent de gestion de droits numériques (12), et l'utilisation de l'agent de billet incorporé (42-1) pour communiquer avec l'agent externe selon le protocole de vérification prédéterminé.

4. Procédé selon la revendication 3, comprenant en outre l'utilisation d'un agent de billet maître (42-2) installé au niveau du dispositif électronique (10) pour récupérer l'agent formant billet incorporé (42-1) et la clé de billet (26) à partir de l'agent de gestion de droits numériques (12), installer ou autrement amorcer l'agent de billet incorporé (42-1), et munir l'agent de billet incorporé (42-1) d'une référence à la clé de billet (26), à utiliser dans le remboursement de la clé de billet (26) par l'agent de billet incorporé (42-1), tout en conservant la clé de billet (26) de manière sécurisée sous la commande de l'agent de billet maître (42-2).

5. Procédé selon la revendication 1, dans lequel la réception de l'objet formant billet (22) comprend la réception d'un fichier de contenu qui est étiqueté ou autrement empaqueté selon un format de gestion de droits numériques prédéterminé, pour manipulation en tant objet à droits gérés par l'agent de gestion de droits numériques (12).

6. Procédé selon la revendication 1, dans lequel l'agent externe comprend un système de vérification électronique, et dans lequel le remboursement de l'objet formant billet (22) comprend la production d'informations de vérification (54) pour le système de vérification électronique et la vérification d'informations de contre-vérification (56) provenant du système vérificateur électronique, en se basant sur l'utilisation de la clé de billet (26) comme un secret partagé entre l'agent de billet (42) et le système de vérification électronique.

7. Procédé selon la revendication 6, comprenant en outre l'envoi des informations de vérification (54) au système de vérification électronique et la réception des informations de contre-vérification (56) en provenance du système de vérification électronique, via une interface de communication locale (46) entre le dispositif électronique (10) et le système de vérification électronique.

8. Procédé selon la revendication 6, dans lequel le remboursement de l'objet formant billet (22) inclut l'agent de billet (42) recevant un identificateur de billet (50) en provenance de la vérification électronique, l'identificateur de billet (50) correspondant à l'objet formant billet (22), l'agent de billet (42) passant l'identificateur de billet (50) à l'agent de gestion de droits numériques (12) et recevant la clé de billet (26) et un algorithme de chiffrage (58) en retour, et l'agent de billet (42) utilisant la clé de billet (26) et l'algorithme de chiffrage (58) pour produire les informations de vérification (54) pour le système de vérification électronique.

9. Procédé selon la revendication 1, dans lequel l'agent externe comprend un opérateur humain et dans lequel le remboursement de l'objet formant billet (22) comprend l'agent de billet (42) recevant un identificateur de billet (50) via une interface utilisateur (48) du dispositif électronique (10), l'agent de billet (42) passant l'identificateur de billet (50) à l'agent de gestion de droits numériques (12) et recevant la clé de billet (26) et des informations de restitution de billet (52) en retour, et l'agent de billet (42) restituant des informations de billet dans un format vérifiable par un humain via l'interface utilisateur (48) du dispositif électronique (10), selon les informations de restitution.

10. Dispositif électronique (10) ayant un agent de gestion de droits numériques (12) installé en son sein, ledit agent de gestion de droits numériques (12) à utiliser dans un système de gestion de droits numériques préexistants en réseau, ledit dispositif électronique (10) comprenant :
une ou plusieurs interfaces de communication (20) pour recevoir un objet formant billet (22) qui inclut une clé de billet (26) chiffrée avec une clé de chiffrage de contenu (28) selon le système de gestion de droits numériques, et pour recevoir un objet formant droits (30) compatible avec ledit système de gestion de droits numériques, et incluant une ou plusieurs restrictions d'utilisation correspondant à l'objet formant billet (22) et incluant la clé de chiffrage de contenu (28) chiffrée avec une clé de gestion de droits numériques (32) associée à l'agent de gestion de droits numériques (12) ;
une mémoire (34) pour stocker l'objet formant billet (22) et l'objet formant droits (30) ; et
un ou plusieurs circuits de traitement (40) associés de manière opérationnelle à la ou aux plusieurs interfaces de communication (20) et à la mémoire (34) et configurés pour mettre en oeuvre l'agent de gestion de droits numériques (12) et pour mettre en oeuvre au moins un agent de billet (42) qui est configuré pour rembourser l'objet formant billet (22) en se basant sur .
la demande de l'agent de gestion de droits numériques (12) pour vérifier l'objet formant droits (30) en ce qui concerne des restrictions d'utilisation et, si l'utilisation de billet est autorisée, pour déchiffrer l'objet formant billet (22) ; dans lequel l'objet formant billet (22) et l'objet formant droits associés (30) sont formatés selon ledit système de gestion de droits numériques préexistants et sont manipulés par l'agent de gestion de droits numériques (12) de la même manière qu'il manipule d'autres objets restreints de gestion de droits numériques ;
la récupération de la clé de billet (26) à partir de l'agent de gestion de droits numériques (12), soumis à la ou aux plusieurs restrictions d'utilisation ; et
la communication avec un agent externe selon un protocole de vérification prédéterminé, pour vérifier la possession de la clé de billet (26), sans exposer la clé de billet (26) à l'agent externe.

11. Dispositif électronique (10) selon la revendication 10, dans lequel l'agent de billet (42) est configuré pour utiliser un secret partagé ou un couple de clés asymétrique pour vérifier la possession de la clé de billet (26) par l'agent externe.

12. Dispositif électronique (10) selon la revendication 10, dans lequel l'objet formant billet (22) comprend un objet formant billet composite (22) qui inclut un agent de billet incorporé (42-1) et la clé de billet (26), tous les deux protégés par la clé de chiffrage de contenu (28), et dans lequel le ou les plusieurs circuits de traitement (40) sont configurés pour rembourser ledit objet formant billet (22) en récupérant l'agent de billet incorporé (42-1) et la clé de billet (26) à partir de l'agent de gestion de droits numériques (12), et en utilisant l'agent de billet incorporé (42-1) communiquer avec l'agent externe selon le protocole de vérification prédéterminé.

13. Dispositif électronique (10) selon la revendication 12, dans lequel le ou les plusieurs circuits de traitement (40) sont configurés pour mettre en oeuvre un agent de billet maître (42-2), et dans lequel l'agent de billet maître (42-2) est configuré pour récupérer l'agent de billet incorporé (42-1) et la clé de billet (26) à partir de l'agent de gestion de droits numériques (12), installer ou autrement amorcer l'agent de billet incorporé (42-1) et munir l'agent de billet incorporé (42-1) d'une référence à la clé de billet (26), à utiliser dans le remboursement de la clé de billet (26) par l'agent de billet incorporé (42-1), tout en conservant la clé de billet (26) de manière sécurisée sous la commande de l'agent de billet maître (42-2).

14. Dispositif électronique (10) selon la revendication 10, dans lequel l'objet formant billet (22) comprend un fichier de contenu qui est étiqueté ou autrement empaqueté selon un format de gestion de droits numériques prédéterminé, pour manipulation comme un objet à droits gérés par l'agent de gestion de droits numériques (12).

15. Dispositif électronique (10) selon la revendication 10, dans lequel le dispositif électronique est conçu pour communiquer avec un agent externe comprenant un système de vérification électronique, et dans lequel l'agent de billet (42) est configuré pour rembourser l'objet formant billet (22) en produisant des informations de vérification (54) pour le système de vérification électronique et en vérifiant des informations de contre-vérification (56) en provenance du système vérificateur électronique, en se basant sur l'utilisation de la clé de billet (26) comme un secret partagé entre l'agent de billet (42) et le système de vérification électronique.

16. Dispositif électronique (10) selon la revendication 15, dans lequel l'agent de billet (42) est configuré pour utiliser une interface de communication locale (46), comme une des une ou plusieurs interfaces de communication (20), pour envoyer les informations de vérification (54) au système de vérification électronique et recevoir les informations de contre-vérification (56) en provenance du système de vérification électronique.

17. Dispositif électronique (10) selon la revendication 15, dans lequel l'agent de billet (42) est configuré pour rembourser l'objet formant billet (22) en réponse à la réception d'un identificateur de billet (50) en provenance de la vérification électronique, l'identificateur de billet (50) correspondant à l'objet formant billet (22), et dans lequel l'agent de billet (42) est configuré pour passer l'identificateur de billet (50) à l'agent de gestion de droits numériques (12) et recevoir la clé de billet (26) et un algorithme de chiffrage (58) en retour, et pour utiliser la clé de billet (26) et l'algorithme de chiffrage (58) pour produire les informations de vérification (54) pour le système de vérification électronique.
